# EUROPEAN PATENT APPLICATION

(11) **EP 1 258 306 A2**
(43) Date of publication of application: **20.11.2002**
(21) Application number: 02008823.3
(22) Date of filing: 19.04.2002
(51) Int. Cl.: B23D 59/00, B27B 31/00

(54) **System for detecting size unevennesses of cut-stock boards**

(30) Priority: 18.05.2001 IT MI20011046
(71) Applicant: C.M.L. S.R.L., 20040 Cambiago, (Milano) (IT)
(72) Inventor: Villa, Valentino, 20040 Cambiago, (Milano) (IT)
(74) Representative: Cicogna, Franco

(57) **Abstract**

A system for detecting and storing, by a computer, unevennesses of boards made by cutting stocks, comprises conveyor devices for taking, individually, the cut-stock boards to arrange said boards at a reading and storing assembly for reading and storing the size characteristics of each board, said reading and storing assembly including a plurality of turning over arms and laser beam projectors or TV cameras.

## Description

### BACKGROUND OF THE INVENTION

The present invention relates to a system for detecting possible size unevenesses of boards made by cutting wood stocks or logs.

As is known, tree stocks or logs are rather uneven, since they are not perfectly cylindric and have uneven peripheral contours, and a varying diameter which varies depending on the stock or tree height.

Frequently, the cut boards, upon drying, are undesirably deflected or curved.

### SUMMARY OF THE INVENTION

Thus, the aim of the present invention is to provide such a system allowing to optimize following processing steps on the cut boards, thereby providing board or board portions as accurate as possible, and having a very good size evenness.

Within the scope of the above mentioned aim, a main object of the present invention is to provide a system for making perfectly calibrated boards, while reducing to a minimum waste wood materials which, in prior board cutting machines are comparatively high.

In actual practice, prior cut board processing machines do not allow an operator to properly choose the most suitable processing operations to be performed on a cut board or on a cut board portion, to provide, at the end of the machining operations, a cut board having an accurate evenness.

Yet another object of the present invention is to provide such a machine or system which, owing to its specifically designed features, is adapted to operate in a full automatic manner, thereby reducing to a minimum the requirements of manual labour.

Yet another object of the present invention is to provide such a cut-stock board processing system which can be controlled only by three controlling operators at maximum.

Of the above mentioned controlling operators, one controls the cut-stock board feeding to the system, another controls the laser projectors, to automatically detect the size unvennesses of the board, and the third operator controls the board unloading or discharging assembly.

Yet another object of the present invention is to provide such an automatic machine allowing to properly detect and process large amounts of cut boards, thereby reducing by about 10 times the processing time which would be otherwise required for manually processing the cut stock boards.

A further object of the present invention is to provide such a system or machine specifically designed to reduce to a minimum finishing operations on the cut boards, i.e. further cutting and sawing operations in a longitudinal directions of the boards, at the output of the inventive system.

In this connection it should be apparent that a precise and accurate detection of the cut board unevennesses would result in less subsequent machining operations, to provide even cut boards, thereby allowing the processed boards to be optimally used.

As stated, the above mentioned further processing operations conventionally comprise a longitudinal cutting of the boards, removing therefrom damaged portions, further cutting the boards to separate the same, in the longitudinal direction, into two or more portions, having a desired size evenness and sufficient finishing features.

### BRIEF DESCRIPTION OF THE DRAWINGS

The above mentioned features, as well as yet other features, of functional and constructional nature, of the system according to the present invention, will become more apparent hereinafter from the following detailed disclosure, with reference to the figures of the accompanying drawings, where:

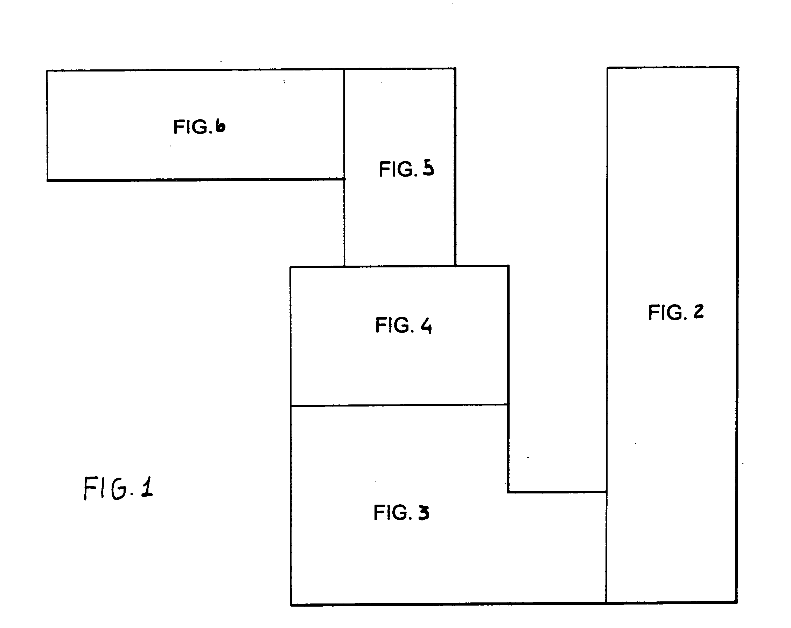

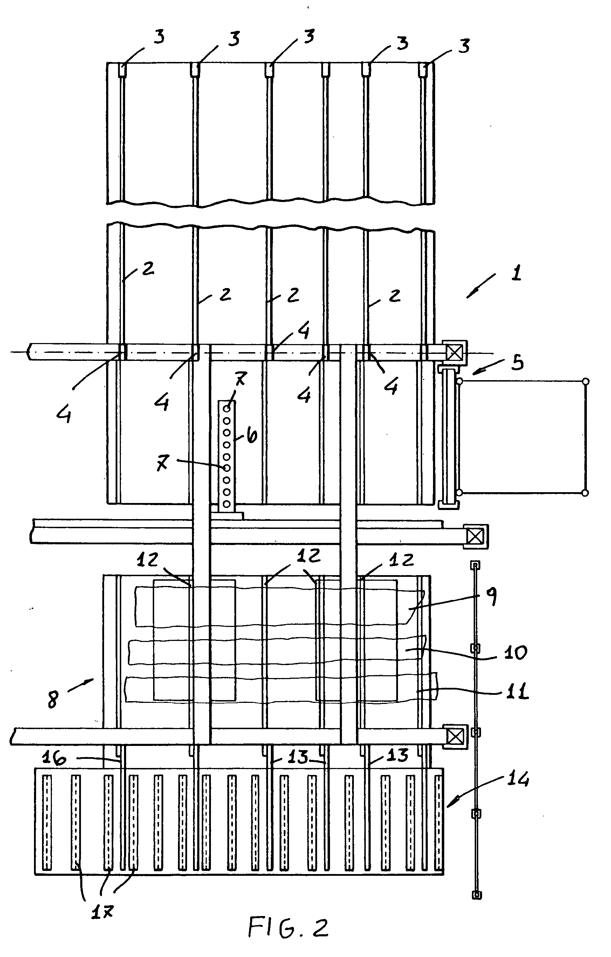

Figure 1 is a schematic view showing the arrangement of the component assemblies included in the cut-stock board processing system according to the present invention;
Figure 2 is a schematic top plan view of the board feeding assembly, comprising a conveyor belt for conveying board packs, which are driven on a conveyor assembly including several parallel chains entrained, at their end portions, on gear wheels in turn driven by driving motors; said figure 2 further illustrating an assembly including a plurality of suction cups, for taking a board layer and arranging said board layer on a separating assembly for individually separating the board of said board layer, said separating assembly being arranged downward and being designed for taking, one by one, the boards taken from said stacked board layer; the separating assembly conveying the separated boards on conveyor chains which can be raised and lowered with respect to a motor driven roller assembly including a plurality of rollers driven by a motor reducing unit;

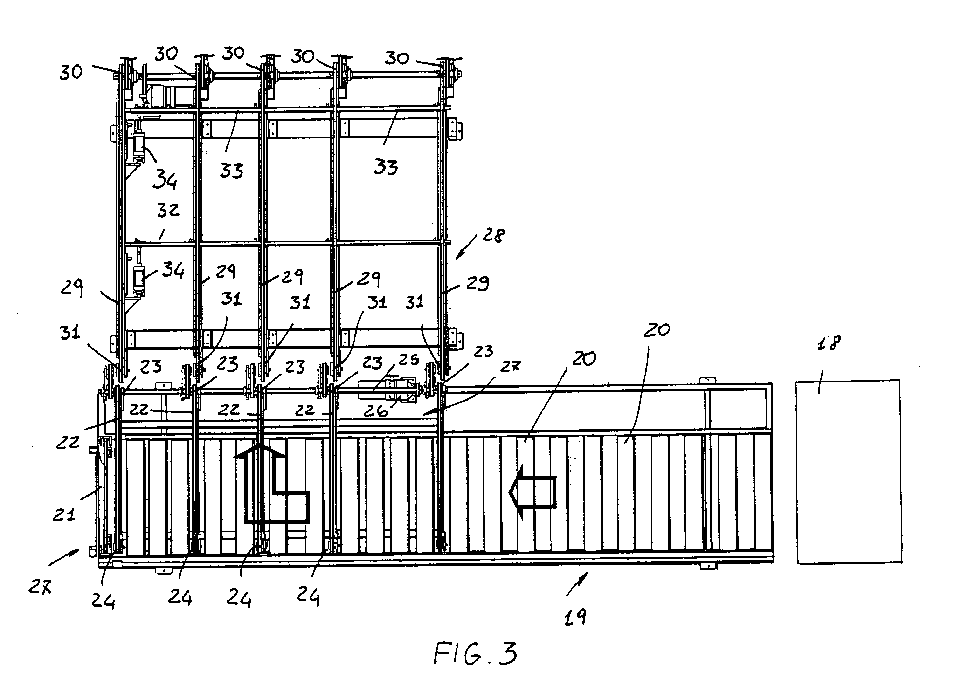

Figure 3 is a top side view showing a further portion of the system according to the present invention, which further comprises a brushing machine and a feeding assembly, the feeding assembly including a plurality of driven rollers for feeding longitudinally the boards to cause said fed boards to abut against a stop or detent wall, which is pneumatically driven and can be raised and lowered; figure 3 further showing another portion of the inventive system or machine, comprising a further conveyor assembly including a plurality of conveyor chains, entrained at their end portions on entraining pinions driven by shafts which cause said chains to be driven with a synchronous translating movement; said chains being driven by motor-reducing units, which rotatively drive a shaft including pinions, which drives in turn the chains with an entrainment type of driving;

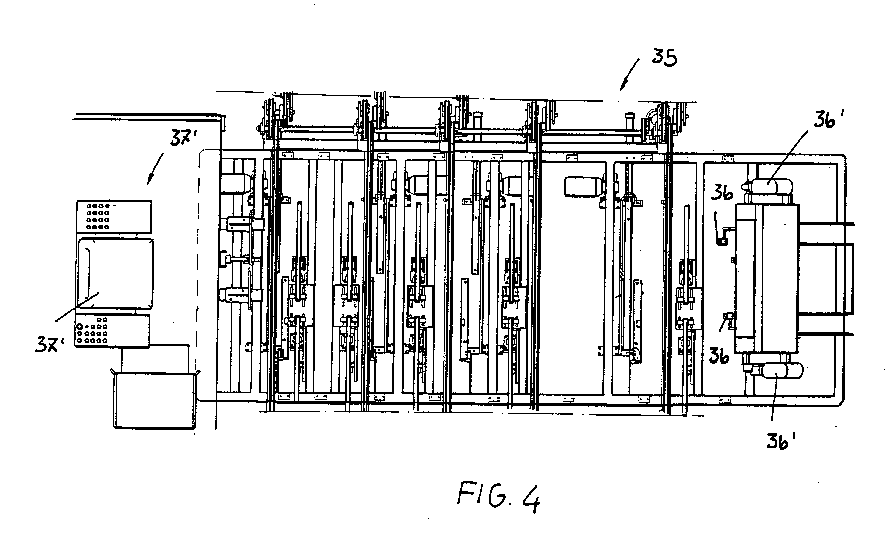

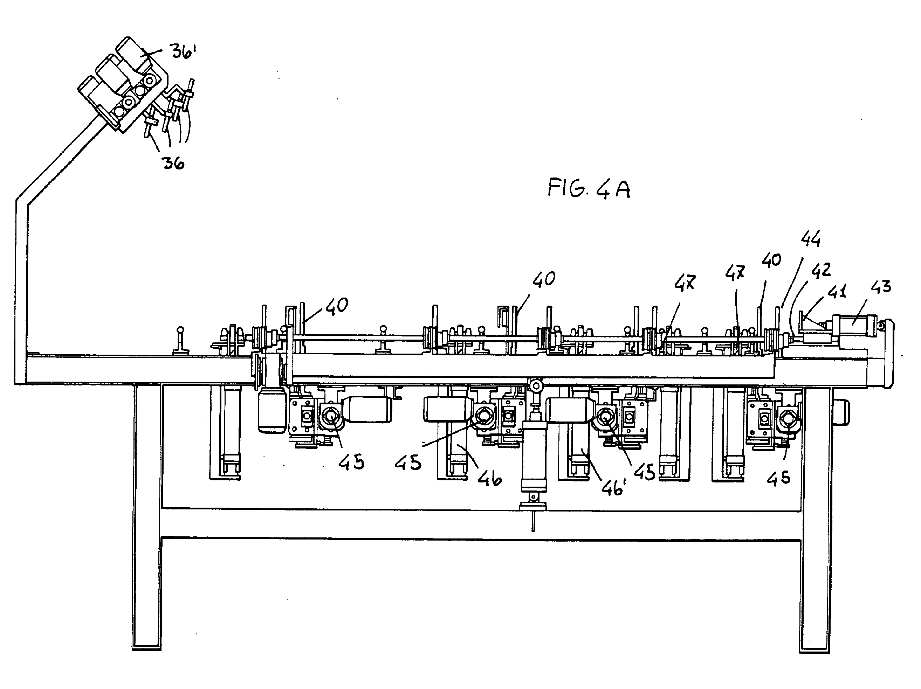

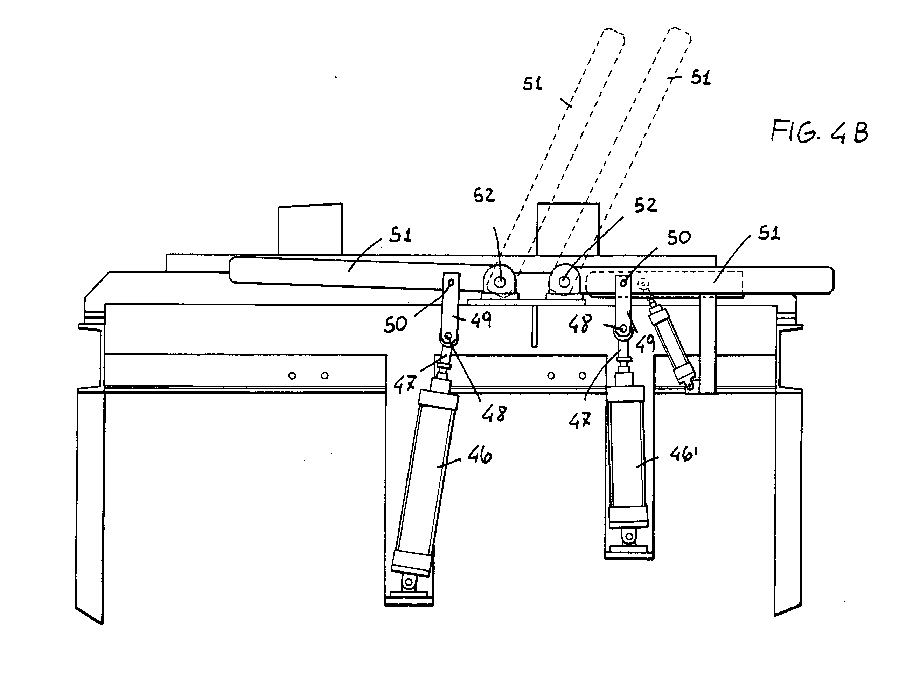

Figures 4A and 4B are respectively a detail top plan view and two side views of a reading and storing assembly for reading and storing size characteristics of each board; said reading and storing assembly including, in particular, a plurality of turning-over arms and laser beam projectors, driven respectively through respective servomotors controlled by an operator, which orients them using a plotter or manual driving elements, for detecting by a light beam, the different thicknesses and unevennesses of the boards, along their longitudinal and cross directions; said laser projectors, in an alternative embodiment, can be replaced by a plurality of TC cameras, detecting, through the overall possible positions, the size characteristics of the boards to be monitored, and the data therefrom being stored in a computer storing means;

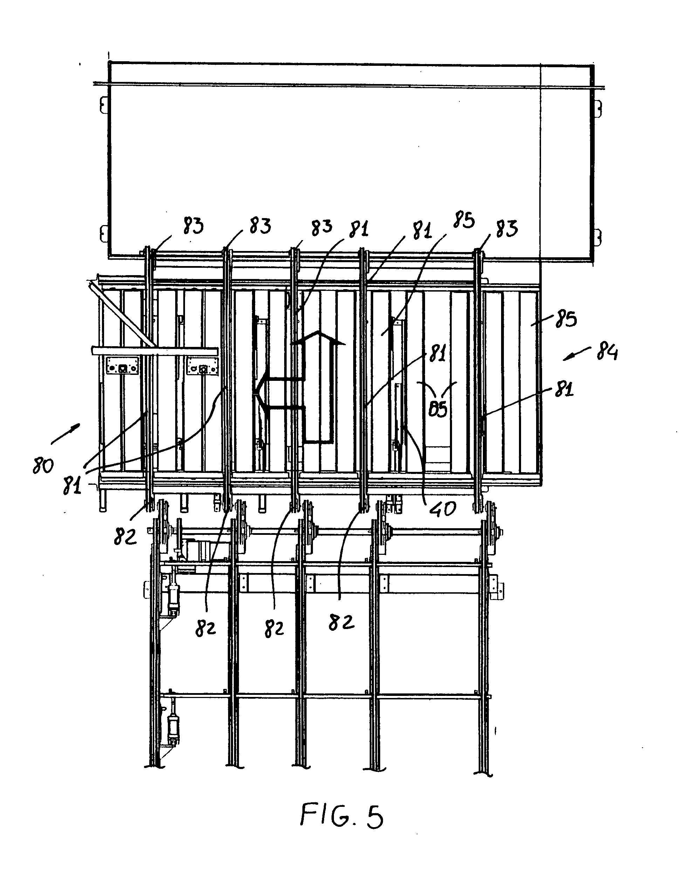

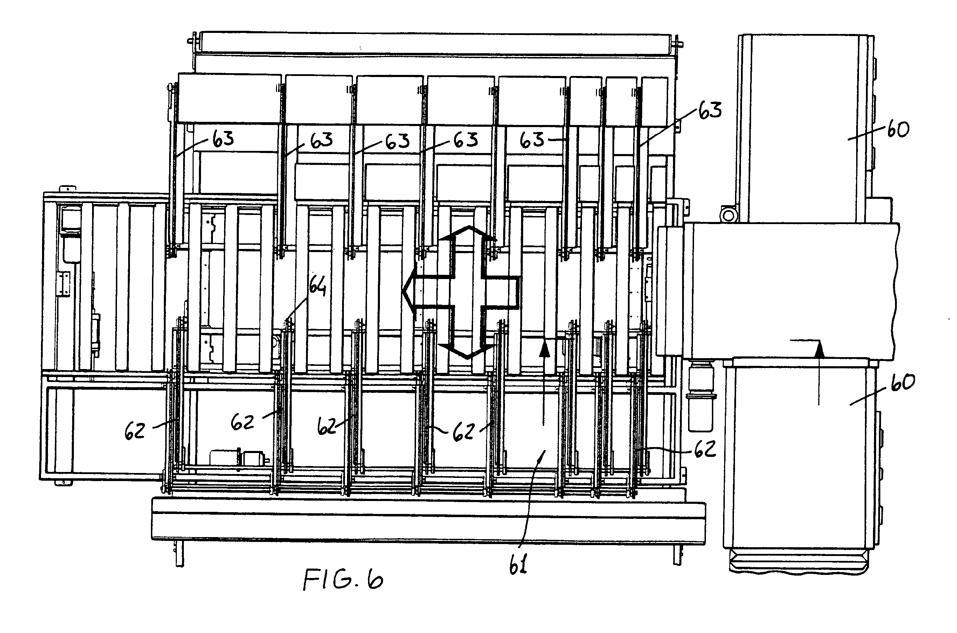

Figure 5 shows a conveyor belt and a further assembly, in which the boards are raised and located at positions corresponding to those they assumed in the assembly for reading the size characteristics; the latter assembly operating as a centering-supplying or feeding assembly and being provided for feeding, through a plurality of motor driven rollers, the individual boards, so as to convey them to a following operating assembly, shown in figure 6;
Figure 6 shows a cutting machine, operating in a longitudinal direction, and which cuts or splits the boards into two or more board portions, depending on the size characteristics and unevennesses which have been detected by the detecting means and which have stored them in the computer storing means;

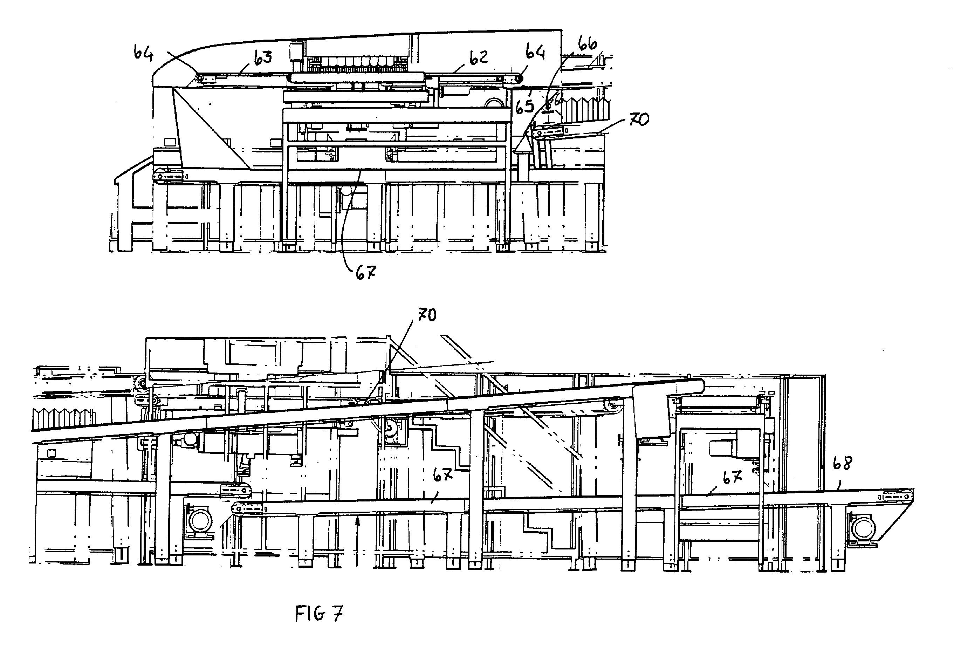

Figure 7 is a side view illustrating a mechanical assembly, provided for unloading sidewise the portions being cut and which are considered as waste material; this figure represents moreover the above indicated unloading assembly, including a top assembly driving the boards to be unloaded either to the right or to the left; the unloaded board being conveyed, depending on their features, through a top conveying line, or by opening specifically provided deflecting elements being unloaded on slanted surfaces; said boards being conveyed to a top supporting surface toward unloading openings, if they are considered as waste materials or materials having a poor homogeneity, and for a following evaluation about a possible use thereof.

### DESCRIPTION OF THE PREFERRED EMBODIMENTS

With reference to the number references of the figures of the accompanying drawings. The system according to the present invention, which has been specifically designed for detecting possible size unevennesses of boards made by cutting stocks or logs, comprises a inlet feeding assembly 1, including a plurality of conveyor chains 2, which are arranged parallel to one another and entrained, at their end portions, on suitable pinions 3 and 4.

Said pinions are in turn supported by cross-arranged supporting shafts, with respect to the wood boards feeding or advancing direction.

Downstream of said inlet feeding assembly for feeding the board packs, is provided a further operating assembly 5 comprising two or more top suction assemblies 6, arranged on parallel arms which support a plurality of suction cups 6.

The above mentioned suction head assembly 7 can be driven in a cross and longitudinal direction with respect to the individual wood board feeding direction.

More specifically, said suctions heads 7 can be transversely driven of the longitudinal direction of the individual boards, thereby arranging a plurality of boards on a board separating assembly 8.

In the drawings, the wood boards have been shown by a top plan view, and have been indicated by the reference numbers 9, 10 and 11.

In this connection it should be pointed out that a suction head, 7 deposits, on the separating assembly 8, a plurality of wood boards, and then causing said boards to be withdrawn up to the operating assembly 5.

The latter comprises a plurality of said suction heads 7 and suction cups 6, designed for taking by suction a layer of boards.

Such a board layer conventionally comprises a plurality of wood boards, generally two or three boards, which are supported by separating strips.

Said separating strips, each time a plurality of boards 9, 10 and 11 are taken, are arranged on the top of or above the wood board pack.

Thus, it is necessary, in alternating operating steps, to take the above mentioned separating strips and to unload or discharge them sidewise.

In order to perform such an operation, the suction heads are so designed as to be able of being transversely driven of the board feeding direction, to laterally unload, either to the right or to the left, or, in alternating unloading operations, in both directions, the mentioned separating strips which, in turn, will be arranged at the top of each board pack, and which, as stated, must be unloaded from the system.

The board separating assembly 8 comprises a plurality of chains 12, which, as they are driven, convey the boards, individually, through further chains 13, to a motor driven roller assembly 14.

Thus, it would be apparent that the board separating assembly 8 conveys, one at a time, the boards 9, 10 and 11, by causing said boards 9, 10 and 11 to be driven on the roller assembly 14.

This result can be achieved since the conveyor chains 12 are driven by step motors which are designed for feeding said boards 9, 10 and 11, individually, on the conveyor chains 13, for conveying said boards toward said motor driven roller assembly 14.

As shown, the conveyor chains 13 are entrained on entraining pinions which are pivoted at pivot pins 16.

Thus, the chain 13 assembly, together with the respective supporting shafts, are adapted to partially rotate about the pivot pins 16, to be raised and lowered with respect to the place defined by the motor driven roller assembly 14, including a plurality of rollers 17.

The boards, individually conveyed, are longitudinally fed or supplied toward a brushing device 18, clearly shown in figure 3.

The boards, after having being subjected to a brushing operation in said brushing device 18, are conveyed to a further roller assembly 19, including a plurality of motor driven rollers 20, causing the individual boards to be fed up to a stop wall 21, which is driven to perform either a lowering or raising movement by suitable pneumatic driving assemblies.

More specifically, the mentioned stop or detent wall 21 allow the boards to be perfectly aligned to be then further driven in a direction perpendicular to their longitudinal axis by means of a plurality of further conveyor chains 22, entrained, at their end portions, on pulleys 23 and 24 driven by a driving shaft 25 which is coupled by belts or further chains to a motor reducing unit 26.

A switching assembly 27 is downstream coupled to a further conveyor assembly 28, comprising a plurality of further conveyor chains 29, entrained, at their end portions, on suitable pinions 30 and 31.

Said pinions 30 and 31 are motor driven, or they derive their driving from the chains arranged either upstream or downstream.

The conveyor assembly 28 further comprises stop walls 32 and 33 which are vertically reciprocated by pneumatic pistons 31 provided for controlling the raising and lowering movements of said stop walls 32 and 33.

Thus, the wood boards 9, 10 and 11 are separately conveyed toward a reading assembly for detecting and storing the size characteristics of each individual board.

Said reading-detecting assembly comprises a plurality of laser beam projectors 36, which, if desired, can be replaced by TV cameras, arranged with any desired directional arrangements.

In particular, the laser beam projectors 36 are driven, through servomotors 36', by an operator arranged in a control station 37 also including a control computer.

In particular, the operator can drive, through plotter means or suitable driving or control elements, the mentioned laser beam projectors 36, so as to orient them with respect to the boards being controlled, to detect the contour of said boards, after having located said boards at fixed positions, by using the disclosed centering assemblies.

The latter comprise gripper pairs 40, which tend to be displaced toward one another, after having pushed longitudinal the boards by pusher means 41 coupled to the piston rod of a pneumatic piston 43, thereby arranging said boards at a starting position located at a home or reference point 44, under the control of the pusher element 41 at its frontward end of stroke position.

Figure 4A shows motor reducing units 45, for transversely or cross-aligning the individual boards.

Figure 4B shows a plurality of pneumatic pistons 46 and 46' which, through a driving rod 47 pivoted at 48, drive respective arms 49 in turn pivoted, at 50, to the arms 51.

Said arms 51 are adapted to rotate about pivot pins 52 thereby allowing the boards to be turner over either to the right or to the left, depending on the driving of the piston, arranged either at a right or at a left position, and indicated by the reference numbers 46 and 46'.

As shown in figure 5, the wood boards are then conveyed to a centering feeding assembly 80, including a plurality of conveyor chains 41 entrained, at their end portions, on pinions 82 and 83, mounted on dedicated shafts, each of which are driven by respective motors or assemblies derived from motor-reducing units.

The chains 81 can partially swing about a swinging axis therefor, in order to allow said chains 81 to be properly raised and lowered to arrange said chains either above or under a motor driven roller assembly 84 comprising a plurality of suitably motor driven rollers 85.

The centering-supplying assembly 80 further comprises centering grippers 40, like that which have been there in above disclosed included in the reading and storing assembly for reading and storing the size characteristics of each board.

Such an assembly has been indicated by the reference number 35 and is construction-wise like the centering assembly 80, in which the boards must be centered and arranged at positions perfectly corresponding to those position at which the size and features of the boards have been detected and stored by said reading or detecting and storing assembly 35.

The chains 81 and their supporting assemblies, after having centered the boards, are lowered whereas the motor driven assembly 84, including a plurality of motor driven rollers 85, is so operated as to convey the individual boards to a trimming assembly 60, as shown in figure 6.

In the latter are performed necessary longitudinal trimming or cutting operations for cutting several portions of boards, thereby eliminating uneven board portions, i.e. board portions with uneven size or shape.

The thus trimmed boards are then conveyed to a choosing or sorting assembly 61, comprising a plurality of further conveyor chains, respectively the right conveyor chains 62 and the left conveyor chains 63.

Said conveyor chains 62 and 63 being provided for unloading, either to the right or to the left, the board portions which have been preliminarily longitudinally cut.

With reference to figure 7, it shows the conveyor chains 62 and 63 respectively oriented to the left and to the right, for separating the mentioned board portions.

The conveyor chains 63, which, at their end portions, are entrained on pinions 64 and are suitably motor driven, comprise a movable wall 65, pivoted at a pivot point 66, and provided for raising and lowering.

At the raised position thereof, the boards or board portions conveyed on the conveyor chains 62 fall on the slanted surface or plane 65, and are unloaded on the bottom belt 67, as they have so damaged as to be considered as waste.

In this case, the board portions unloaded on the bottom belt 67 are conveyed to the unloading or exit outlet 68, by further conveyor belts or chains.

With the wall 65 in an open position, the board portions are then driven along a chute 65 thereby arranging them on the conveyor belts or chains 70 arranged on the top and being conveyed toward the end of these chains to be subjected to further optional machining and surface finishing operations.

While the inventive system has been hereinabove disclosed and illustrated by way of an illustrative but not limitative example, it should be apparent that it is susceptible to several variations and modifications, mainly with respect to the conveyor chains or belts and their arrangement and orienting.

Furthermore, it would be possible to include in the subject system further other cutting assemblies, according to requirements; moreover, the inventive system can also be coupled to further cutting or milling machines, which could comprise a further machining line, by using a single detection and storing point to perform the several required operations for optimizing the machining of the wood boards, with an operating machining speed as great as possible, without departing from the scope of the invention.

## Claims

1. A system for detecting unevenness of wood boards made by cutting wood stocks or logs, **characterized in that** said system comprises a plurality of conveyor devices for taking, individually, said boards so as to arrange said boards at a detecting and storing assembly for detecting and storing the size characteristics of each board, said detecting and storing assembly including a plurality of taking over arms and laser beam projectors or TV cameras and a computer for storing the data.

2. A system, according to Claim 1, **characterized in that** said laser beam projectors are driven by an operator which directs said laser beam projectors by using plotter means or manual driving means for detecting and storing, under the control of said computer and the light beams from said laser projectors, the thicknesses parameters and defects of said boards, along their longitudinal and cross directions.

3. A system, according to one or more of the preceding claims, **characterized in that** said TV cameras are adapted to detect said size characteristics and defects of said boards to be monitored, through a range of possible positions.

4. A system, according to one or more of the preceding claims, **characterized in that** said laser beam projectors or TV cameras detect the contour of the individual boards after having arranged said boards at fixed positions, by using centering assemblies.

5. A system, according to one or more of the preceding claims, characterized in' that said centering assemblies comprise pairs of grippers, which are caused to be displaced toward one another after having longitudinally fed the boards by pushing means coupled to a piston rod of a pneumatic piston, thereby arranging said boards at a starting position, arranged at a home location, achieved at an end of stroke or limit position of said pushing means.

6. A system, according to one or more of the preceding claims, **characterized in that** said system comprises a plurality of conveyor chains, arranged in parallel to one another, and entrained at their end portions on entrainment pinions supported by supporting shafts arranged transversely of the individual board feeding direction.

7. A system, according to one or more of the preceding claims, **characterized in that**, downstream of a board pack inlet feeding assembly, is provided a suction assembly comprising two or more top suction heads, arranged on arms which are in turn arranged in parallel and support a plurality of suction cups.

8. Asystem, according to one or more of the preceding claims, **characterized in that** said suction heads are adapted to be driven in a cross direction and in a longitudinal direction with respect to the individual board feeding direction.

9. A system, according to one or more of the preceding claims, **characterized in that** said suction heads are adapted to translate in a transversal direction with respect to the longitudinal direction of the individual boards, thereby arranging a plurality of boards on a board separating assembly, for individually separating said boards from one another.

10. A system, according to one or more of the preceding claims, **characterized in that** said suction head deposits on said board separating assembly a plurality of boards and then is withdrawn to reach said suction assembly including said suction heads and suction cups, for taking a board layer.

11. A system, according to one or more of the preceding claims, **characterized in that** said board layer comprises a plurality of boards, generally two or three boards, which are supported by separating strips.

12. A system, according to one or more of the preceding claims, **characterized in that** said separating strips, each time a plurality of boards are taken, are arranged at the top of a board pack supported on the conveyor chains.

13. A system, according to one or more of the preceding claims, **characterized in that** said system comprises means for alternately laterally unloading said separating strips.

14. A system, according to one or more of the preceding claims, **characterized in that** said suction heads are adapted to be driven in a direction transversal of the board feeding direction so as to unload, either to the right or to the left, or alternately in both directions, said separating strips which, in turn, are arranged on the top of each board pack to be unloaded from the system.

15. A system, according to one or more of the preceding claims, **characterized in that** said board separating assembly comprises a plurality of chains for conveying the separated boards, through further chains, to a motor driven roller assembly.

16. A system, according to one or more of the preceding claims, **characterized in that** said board separating assembly conveys, one at a time, the separated boards on said motor driven roller assembly.

17. A system, according to one or more of the preceding claims, **characterized in that** said system comprises a plurality of conveyor chains which are driven by step motors for feeding said separated boards, one at a time, on said conveyor chains for conveying said separated boards to said motor driven roller assembly.

18. A system, according to one or more of the preceding claims, **characterized in that** said conveyor chains are entrained, at their end portions, on pivoted pulleys pivoted on pivot pins.

19. A system, according to one or more of the preceding claims, **characterized in that** said conveyor chain assembly, together with the supporting shafts therefor, are adapted to partially turn about said pivot pins, so as to be raised or lowered with respect to a plane defined by said motor driven roller assembly including a plurality of rollers.

20. A system, according to one or more of the preceding claims, **characterized in that** said separated boards, conveyed one at a time, are longitudinally fed toward a brushing device.

21. A system, according to one or more of the preceding claims, **characterized in that** said separated boards are conveyed to said brushing device through a further roller assembly including a plurality of respective driven rollers for feeding said separated boards to a stop wall which is lowered or raised by pneumatic driving assemblies.

22. A system, according to one or more of the preceding claims, **characterized in that** said stop wall allows the boards to be perfectly aligned, said aligned boards being then fed in a direction perpendicular to their longitudinal axis by a further series of conveyor belts, entrained, at their end portions, on pinions driven by a driving shaft coupled through belts or chains to a motor reducing unit.

23. A system, according to one or more of the preceding claims, **characterized in that** said system further comprises a switching assembly coupled downstream and including a further conveyor assembly comprising in turn a plurality of conveyor chains, entrained, at their end portions, on entrainment pulleys.

24. A system, according to one or more of the preceding claims, **characterized in that** said entrainment pulleys are either directly driven or derive their driving from driving chains arranged either upstream or downstream.

25. A system, according to one or more of the preceding claims, **characterized in that** said conveyor assembly coupled to said switching assembly comprises stop walls which are driven, with a reciprocating vertical movement, by pneumatic pistons causing said stop walls to be raised and lowered.

26. A system, according to one or more of the preceding claims, **characterized in that** boards are separately conveyed to said detecting assembly for detecting the size characteristics of said boards.

27. A system, according to one or more of the preceding claims, **characterized in that** said detecting assembly comprises a plurality of laser beam projectors or TV cameras arranged in several directions.

28. A system, according to one or more of the preceding claims, **characterized in that** said laser beam projectors are driven by an operator arranged in a control station including a computer having storing means for storing the board size data.

29. A system, according to one or more of the preceding claims, **characterized in that** said system further comprises plotter or control means for operating said laser beam projectors by directing said laser beam projectors on desired boards so as to detect the contour of said boards and store the related data after having arranged said boards at fixed positions by said centering assemblies.

30. A system, according to one or more of the preceding claims, **characterized in that** said centering assemblies comprise pairs of grippers which are displaced toward one another after having pushed longitudinally the boards, by pushing means coupled to the piston rod of a pneumatic piston, so as to arrange said boards at a starting position, or home position, provided by said pushing means at an end of stroke condition thereof.

31. A system, according to one or more of the preceding claims, **characterized in that** said system further comprises motor reducing units for transversely aligning the individual boards.

32. A system, according to one or more of the preceding claims, **characterized in that** said system comprises moreover a plurality of pneumatic pistons which drive, through pivoted piston rods, operating arms in turn pivoted to further driving arms.

33. A system, according to one or more of the preceding claims, **characterized in that** said driving arms are designed for turning about said pivot pins thereby allowing said boards to be turned over either to the right or to the left, by operating pistons arranged either to the right or to the left.

34. A system, according to one or more of the preceding claims, **characterized in that** said boards are conveyed to a centering supplying assembly including a plurality of conveyor belts entrained at their end portions on entranment pinions applied to driving shafts some of which are driven either by driving motors or assemblies derived from said motor reducing units.

35. A system, according to one or more of the preceding claims, **characterized in that** said chains are adapted to partially swing about a swinging axis, to allow said chains to be raised or lowered, thereby arranging said chains either above or under a motor driven roller assembly including a plurality of motor driven rollers.

36. A system, according to one or more of the preceding claims, **characterized in that** at said centering-supplying assembly, a plurality of centering grippers, like those included in said detecting assembly for detecting the size features of each board are provided.

37. A system, according to one or more of the preceding claims, **characterized in that** said detecting assembly is construction wise like to said centering-supplying assembly, in which said boards must be centered to arrange them at positions perfectly corresponding to those positions at which the size and features of said boards have been detected and stored by said detecting assembly and computer included therein.

38. A system, according to one or more of the preceding claims, **characterized in that** said system comprises further conveyor chains and supporting means therefor which, upon having centered said boards, are lowered with a motor driven assembly comprising a plurality of driven rollers being operated so as to convey said boards to a trimming assembly therein said boards are trimmed, longitudinally, for removing therefrom defective board portions.

39. A system, according to one or more of the preceding claims, **characterized in that** said cut boards are conveyed to a sorting assembly, including a plurality of right and left conveyor belts.

40. A system, according to one or more of the preceding claims, **characterized in that** said conveyor belts unload either to the right or to the left the cut board portions which have been longitudinally cut.

41. A system, according to one or more of the preceding claims, **characterized in that** said system further comprises further conveyor belts, respectively directed to the left and to the right, for separating the board portions.

42. A system, according to one or more of the preceding claims, **characterized in that** some of said conveyor belts comprise a movable wall, pivoted on a respective pivot pin, for raising and lowering.

43. A system, according to one or more of the preceding claims, **characterized in that**, in a raised position of said movable wall, defective boards or board portions conveyed on said conveyor chains fall on a slanted surface and are unloaded from a bottom belt.

44. A system, according to one or more of the preceding claims, **characterized in that** the board portions unloaded on said bottom conveyor belt are conveyed to an outlet by further conveyor belts or conveyor chains.

45. A system, according to one or more of the preceding claims, **characterized in that** with said movable wall in an open condition, said board portions are caused to fall through a chute and arranged on a top conveyor belt or conveyor chain to be conveyed toward an end portion of said conveyor belt or chain and subjected to optional further machining surface finishing operations.

46. A system, according to one or more of the preceding claims, **characterized in that** said system further comprises cutting-milling assemblies.

47. A system, according to one or more of the preceding claims, **characterized in that** said system is series coupled to cutting, milling or the like machines to provide an automatized board processing line including a single detecting and storing station controlled by a control computer.

48. A system, according to one or more of the preceding claims, **characterized in that** said system comprises a plurality of mechanical elements, and substantially as broadly disclosed and illustrated in the preceding disclosure and in the figures of the drawings accompanying the present Industrial Invention Patent Application.
